# EUROPÄISCHE PATENTANMELDUNG

(11) **EP 0 744 491 A1**
(43) Veröffentlichungstag der Anmeldung: **27.11.1996**
(21) Anmeldenummer: 96105323.8
(22) Anmeldetag: 03.04.1996
(51) Int. Cl.: D21G 1/00, F16C 13/00

(54) **Walze mit Schwingungsdämpfer**

(30) Priorität: 20.05.1995 DE 29508422 U
(71) Anmelder: Voith Sulzer Papiermaschinen GmbH, 89509 Heidenheim (DE)
(72) Erfinder: Grabscheid, Joachim, 89547 Heuchlingen (DE)

(57) **Zusammenfassung**

Die Erfindung betrifft eine Walze mit Schwingungsdämfer, insbesondere zur Herstellung oder Behandlung von Faserstoffbahnen, z. B. Papier- oder Kartonbahnen. Eine derartige Walze, welche die Merkmale des Oberbegriffs des Anspruchs 1 aufweist, ist bekannt aus EP 0 330 657, Figur 6.

Der vorliegenden Erfindung liegt die Aufgabe zugrunde, die bekannte Walze mit Schwingungsdämfer dahingehend weiter zu entwickeln, daß das Volumen des Zuführkanales in möglichst einfacher und dennoch im Dauerbetrieb zuverlässiger Weise varierbar ist. Dabei sollen die Vorrichtungen zur Volumen-Veränderung des Zuführkanales nach wie vor in möglichst geringer Entfernung von den verengten Leitungen (z. B. Drosselbohrungen), die zu den Zylinderräumen führen, angeordnet sein.

Diese Aufgabe wird dadurch gelöst, daß die in dem Zuführkanal (28) befindliche Druckflüssigkeit (28) teilweise durch ein elastisch nachgiebiges Element begrenzt ist wobei das elastisch nachgiebige Element ein mechanisches Bauteil (21, 22, 23, 34, 35, 36) ist, das unter dem Druck der Druckflüssigkeit verformbar ist.

## Beschreibung

Die Erfindung betrifft eine Walze mit Schwingungsdämpfer, insbesondere zur Herstellung oder Behandlung von Faserstoffbahnen, z.B. Papier- oder Kartonbahnen. Eine derartige Walze, welche die Merkmale des Oberbegriffs des Anspruchs 1 aufweist, ist bekannt aus EP 0 330 657, Figur 6.

Es handelt sich also um eine Walze mit einer stationären Zentralachse und mit einem um diese Zentralachse rotierenden Walzenmantel. In der Zentralachse ist eine Reihe von zylindrischen Bohrungen vorgesehen, die sich in radialer Richtung erstrecken und je einen radial verschiebbaren Kolben aufweisen. Die Zylinderräume können mit einer Druckflüssigkeit gefüllt werden, die eine hydraulische Stützkraft von der Zentralachse über den Kolben auf den Walzenmantel überträgt.

Zum Zuführen der Druckflüssigkeit in die Zylinderräume ist in der stationären Zentralachse ein beispielsweise zentral angeordneter Zuführkanal vorgesehen, der über je eine verengte Leitung (z.B. über eine Drosselbohrung) mit jedem der Zylinderräume verbunden ist. Zum Zwecke der Dämpfung eventueller Vibrationen des Walzenmantels ist in dem zentralen Zuführkanal wenigstens ein Schlauchabschnitt vorgesehen, dessen Enden verschlossen sind und der mit einem Gas gefüllt ist. Dadurch befindet sich also in der zentralen Zuführleitung eine komprimierbare Gasblase, wobei sich ein Gleichgewicht einstellt zwischen dem Druck der Druckflüssigkeit und dem Druck des in dem Schlauchabschnitt befindlichen Gases. Mit anderen Worten: Der zentrale Zuführkanal ist nur teilweise mit Flüssigkeit füllbar, wobei sich das mit Flüssigkeit füllbare Volumen des Zuführkanals verändern kann. Diese bekannte Einrichtung wirkt folgendermaßen:
Wenn der Walzenmantel aus irgendeinem Grund in radialer Richtung eine Schwing-Bewegung ausübt, dann resultieren daraus periodische Volumenänderungen der Zylinderräume und somit auch periodische Änderungen des Druckes der in den Zylinderräumen befindlichen Flüssigkeit. Es findet deshalb über die Drosselbohrungen ein Flüssigkeits-Austausch statt zwischen den Zylinderräumen und dem zentralen Zuführkanal. Bei richtig bemessenen Drosselbohrungen und dank der Tatsache, daß die obenerwähnte Gasblase sich in unmittelbarer Nähe der Drosselbohrungen befindet, wird eine spürbare Dämpfung der Vibrationen des Walzenmantels erzielt.

Die obenerwähnte Druckschrift weist also schon einen Weg in die richtige Richtung; denn unzureichend wirksame Schwingungsdämpfer in derartigen Walzen führen immer wieder zu Schwierigkeiten, beispielsweise in Papierherstellungsmaschinen. Insbesondere kann es zu Qualitäts-Einbußen in den produzierten Papierbahnen kommen. Oder die Schwingungen führen zu vorzeitigem Verschleiß an Teilen der Walze oder an benachbarten anderen Maschinenteilen.

Obwohl also die bekannte Walze mit Schwingungsdämpfer die an sie gestellten Forderungen schon weitgehend erfüllt, bestehen Zweifel an der dauerhaften Wirksamkeit des Schlauchabschnittes, der die genannte Gasblase begrenzt.

Der vorliegenden Erfindung liegt deshalb die Aufgabe zugrunde, die bekannte Walze mit Schwingungsdämpfer dahingehend weiter zu entwickeln, daß das Volumen des Zuführkanales in möglichst einfacher und dennoch im Dauerbetrieb zuverlässiger Weise varierbar ist. Dabei sollen die Vorrichtungen zur Volumen-Veränderung des Zuführkanales nach wie vor in möglichst geringer Entfernung von den verengten Leitungen (z.B. Drosselbohrungen), die zu den Zylinderräumen führen, angeordnet sein.

Diese Aufgabe wird durch das im Anspruch 1 angegebene Merkmal gelöst. Dieses besagt mit anderen Worten: Im Betrieb kann sich ein Gleichgewicht einstellen zwischen dem Druck der Druckflüssigkeit und der Gegenkraft, die aus der Verformung des mechanischen Bauteils resultiert.

Die Erfindung ist anwendbar sowohl bei hydrodynamisch geschmierten Gleitflächen zwischen den Kolben (bzw. Gleitschuhen) und dem Walzenmantel (gemäß EP 0 330 657, Fig. 6) als auch bei Vorhandensein von hydrostatischen Lagertaschen (gemäß DB 38 02 234). Sie ist auch anwendbar bei Vorhandensein nur eines einzigen Kolbens (mit Gleitschuh), der sich über die Länge der Walze erstreckt (US 3, 276, 102).

Ausführungsbeispiele der Erfindung werden nachfolgend an Hand der Zeichnung erläutert.

Die Figur 1 ist ein Teillängsschnitt durch eine Walze mit Schwingungsdämpfer.

Die Figuren 2 bis 5 zeigen unterschiedliche Ausführungsformen des Schwingungsdämpfers, jeweils in einem verkleinerten Teil-Querschnitt entlang der Linie A-A der Figur 1.

Die dargestellte Walze hat eine stationäre Zentralachse 1 und einen um die Zentralachse umlaufenden Walzenmantel 2. In Längsrichtung durch die Zentralachse 1 erstreckt sich ein Zuführkanal 28 für Druckflüssigkeit. Die Druckflüssigkeit gelangt über mehrere radiale Bohrungen 33 in mehrere, in einer Reihe angeordnete Zylinderräume 32. In jedem Zylinderraum befindet sich ein in radialer Richtung verschiebbarer Kolben 31, der an seinem äußeren Ende beispielsweise einen Gleitschuh 30 aufweist. Dieser hat eine an die Form des Walzenmantels 2 angepaßte konvex gekrümmte Gleitfläche. Bei Vorhandensein von Überdruck in den Zylinderräumen 32 werden die Gleitschuhe 30 über die Kolben 31 gegen die Innenfläche des Walzenmantels 2 angedrückt. Dadurch wird der Walzenmantel 2 (der in bekannter Weise an seinen beiden Enden beispielsweise auf der stationären Zentralachse 1 gelagert ist) an eine nicht dargestellte Gegenwalze angedrückt. Dabei findet eine kontrollierte Durchbiegung des Walzenmantels statt; beispielsweise wird die Durchbiegung durch Einstellen eines bestimmten Druckes in den Zylinderräumen auf dem Wert Null gehalten.

Zum Zwecke der Dämpfung eventueller radialer Vibrationen des Walzenmantels 2 ist folgendes vorgesehen:
In jeder der radialen Bohrungen 33 ist ein verengtes Leitungsstück, beispielsweise in Form einer Drossel 27 angeordnet. Außerdem hat die Zentralachse 1 mehrere Querbohrungen 29, welche den Zuführkanal 28 mit dem zwischen Walzenmantel 2 und Zentralachse 1 befindlichen Ringraum verbindet. In diesem Ringraum befindet sich üblicherweise der normale Atmosphärendruck; denn der Ringraum ist an seinen Enden über nicht dargestellte Leitungen mit der Umgebung verbunden.

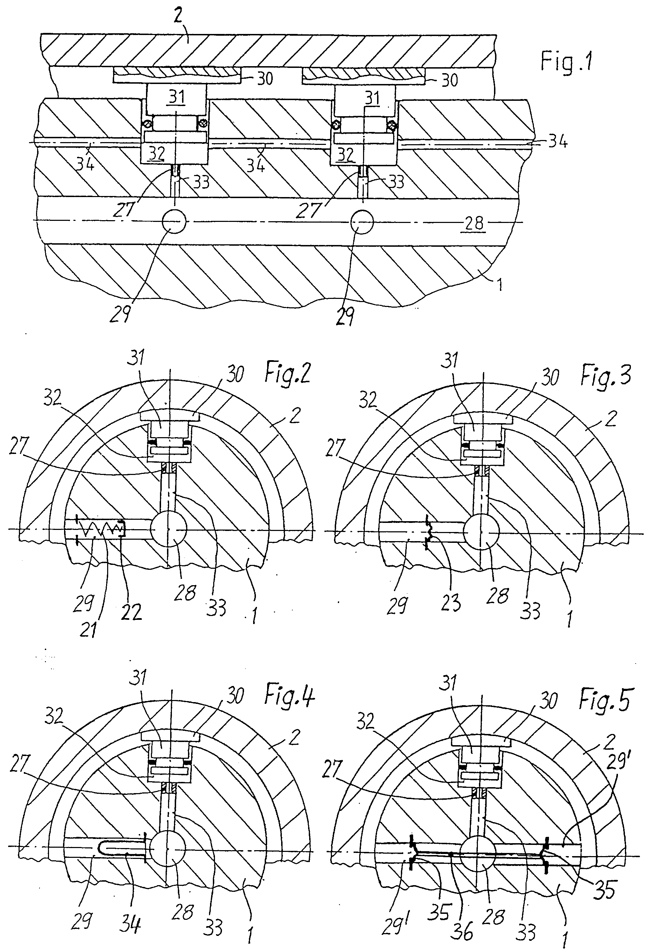

Damit sich bei eventuellen Vibrationen des Walzenmantels das mit Druckflüssigkeit gefüllte Volumen des Zuführkanals 28 rasch und unbehindert ändern kann, ist folgendes vorgesehen:
Gemäß Figur 2 ist das Volumen des Zuführkanals 28 mittels eines in der Querbohrung 29 angeordneten Kolbens 22 begrenzt. Dieser Kolben ist mittels einer Druckfeder 21 gegen den Flüssigkeitsdruck abgestützt.
Gemäß Figur 3 ist in die Querbohrung eine nachgiebige Membrane 23 eingesetzt.
Gemäß Figur 4 erstreckt sich durch die Querbohrung 29 ein hochfestes, dünnwandiges Rohrstück 34, dessen äußeres Ende verschlossen und dessen inneres Ende zum Zuführkanal 28 hin offen ist.
Gemäß Figur 5 ist in einer durchgehenden Querbohrung 29' zu beiden Seiten des Zuführkanals 28 je eine Membrane 35 vorgesehen, wobei die beiden Membranen mittels eines hochfesten und in Längsrichtung dehnbaren Zugstabes 36 verbunden sind.

Die in den Figuren 2 bis 5 dargestellten und zur Schwingungsdämpfung dienenden Einrichtungen werden in der Zentralachse 1 mehrfach vorgesehen, vorzugsweise gleichmäßig über die Länge der Zentralachse verteilt. Bevorzugt ist in unmittelbarer Nähe jeder radialen Bohrung 33 eine Querbohrung 29 vorgesehen, jeweils mit einer Einrichtung zur Schwingungsdämpfung.

## Patentansprüche

1. Walze mit Schwingungsdämpfer, insbesondere als Teil eines Walzen-Paares, vorzugsweise zur Herstellung oder Behandlung von Faserstoffbahnen (z.B. Papier- oder Kartonbahnen), mit den folgenden Merkmalen:
a) eine stationäre Zentralachse (1) erstreckt sich durch einen drehbaren Walzenmantel (2);
b) in der Zentralachse (1) ist wenigstens ein Zylinderraum (32) vorgesehen, in dem ein radial verschiebbarer Kolben (31) angeordnet ist;
c) die Zylinderräume (32) sind mit einer Druckflüssigkeit füllbar, die eine hydraulische Stützkraft von der Zentralachse (1) über den Kolben (31) auf den Walzenmantel (2) überträgt;
d) in der Zentralachse (1) befindet sich ein Zuführkanal (28) für die Druckflüssigkeit, der über je eine verengte Leitung (33) (z.B. mit Drossel (27)) mit den Zylinderräumen (32) verbunden ist;
e) die in dem Zuführkanal (28) befindliche Druckflüssigkeit (28) ist teilweise begrenzt durch ein elastisch nachgiebiges Element;
f) dadurch gekennzeichnet, daß das elastisch nachgiebige Element ein mechanisches Bauteil (21, 22, 23, 34, 35, 36) ist, das unter dem Druck der Druckflüssigkeit verformbar ist.

2. Walze nach Anspruch 1, dadurch gekennzeichnet, daß das mechanische Bauteil eine Druckfeder (21) und einen Kolben (22) umfaßt, der mittels der Druckfeder (21) gegen den Druck der Flüssigkeit abgestützt ist.

3. Walze nach Anspruch 1, dadurch gekennzeichnet, daß das mechanische Bauteil als eine nachgiebige Membran (23) ausgebildet ist.

4. Walze nach Anspruch 1, dadurch gekennzeichnet, daß das mechanische Bauteil als ein dünnwandiges Rohrstück (34) ausgebildet ist, dessen eines Ende flüssigkeitsdicht verschlossen und dessen anderes Ende zum Zuführkanal (28) hin offen ist.

5. Walze nach einem der Ansprüche 1 bis 4, dadurch gekennzeichnet, daß das mechanische Bauteil in einer Querbohrung (29) angeordnet ist, die sich vom Zuführkanal (28) bis zu dem Zwischenraum zwischen Zentralachse (1) und Walzenmantel (2) erstreckt, wobei in dem Zwischenraum im wesentlichen Atmosphärendruck herrscht.

6. Walze nach Anspruch 3, dadurch gekennzeichnet, daß zu beiden Seiten des Zuführkanals (28) je eine Membran (35) vorgesehen ist und daß die beiden Membranen mittels eines in Längsrichtung dehnbaren Zugstabes (36) verbunden sind.

7. Walze nach dem vorangehenden Anspruch, dadurch gekennzeichnet, daß die beiden Membranen in einer durchgehenden Querbohrung 29' angeordnet sind.

8. Walze nach einem der vorangehenden Ansprüche, dadurch gekennzeichnet, daß jedem Zylinderraum (32) wenigstens ein nachgiebiges Element (22, 23, 34 oder 35) zugeordnet ist.
